(19) Europäisches Patentamt
European Patent Office
Office européen des brevets

(11) Veröffentlichungsnummer : **0 114 150**
**B1**

(12) **EUROPÄISCHE PATENTSCHRIFT**

(45) Veröffentlichungstag der Patentschrift : **30.09.87**

(51) Int. Cl.⁴ : **C 08 L 63/00**, C 08 L 61/34, C 08 G 14/06, C 08 G 59/62

(21) Anmeldenummer : **84810011.1**

(22) Anmeldetag : **09.01.84**

(54) **Härtbare Epoxidharzmischungen.**

(30) Priorität : **13.01.83 CH 174/83**

(43) Veröffentlichungstag der Anmeldung : **25.07.84 Patentblatt 84/30**

(45) Bekanntmachung des Hinweises auf die Patenterteilung : **30.09.87 Patentblatt 87/40**

(84) Benannte Vertragsstaaten : **CH DE FR GB IT LI NL SE**

(56) Entgegenhaltungen :
**EP-A- 0 066 447**
**DE-A- 2 025 159**
**DE-A- 2 217 099**
**DE-A- 2 651 172**
**GB-A- 1 032 884**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Haug, Theobald, Dr.**
**Untere Flühackerstrasse 12**
**CH-4402 Frenkendorf (CH)**
Erfinder : **Stockinger, Friedrich**
**Stutzrain 4**
**CH-4434 Hölstein (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 114 150 B1

Jouve, 18, rue St-Denis, 75001 Paris, France

**Beschreibung**

Die vorliegende Erfindung betrifft härtbare Epoxidharzmischungen, die als Härtungsmittel im sauren Medium hergestellte Kondensationsprodukte aus bestimmten Phenolen, bestimmten aromatischen Aminen und Aldehyden oder Ketonen enthalten.

Novolake können bekanntlich auch als Härtungsmittel für Epoxidharze verwendet werden. Es ist ferner bekannt, dass man die Eigenschaften von gehärteten Epoxidharzen verbessern kann, indem man als Härtungsmittel mit aromatischen Aminen, vorzugsweise Anilin, modifizierte Phenol-Formaldehyd-Kondensationsprodukte einsetzt.

Die in den US-Patenten 3,714,121 und 4,278,733 beschriebenen, mit Anilin modifizierten Kondensationsprodukte aus Phenol und Formaldehyd werden in neutralem oder basischem Medium hergestellt und stellen somit Resole dar.

In der DE-OS 2 217 099 werden als Epoxidharzhärtungsmittel bestimmte mit Anilin modifizierte Kondensationsprodukte offenbart, die erhalten werden, indem man Anilin und Phenol gleichzeitig mit Formaldehyd im Molverhältnis von annähernd 1 : 1 : 2 kondensiert, wobei die Kondensation in Gegenwart von alkalischen oder sauren Katalysatoren durchgeführt wird. Die mit solchen Kondensationsprodukten gehärteten Epoxidharze weisen nur geringe Wärmeformbeständigkeiten auf.

Es wurde nun gefunden, dass im sauren Medium hergestellte Kondensationsprodukte aus bestimmten Phenolen und bestimmten aromatischen Aminen und Aldehyden und Ketonen wertvollere Härtungsmittel für Epoxidharze darstellen, da sie mit Epoxidharzen besser verarbeitbar sind, mit Epoxidharzen eine bessere Lagerstabilität aufweisen und den gehärteten Epoxidharzen eine bessere Chemikalienbeständigkeit verleihen.

Gegenstand der vorliegenden Erfindung sind somit härtbare Gemische, enthaltend

(a) Epoxidverbindungen mit durchschnittlich mehr als einer 1,2-Epoxid-gruppe pro Molekül,

(b) im sauren Medium hergestellte Kondensationsprodukte aus Phenolen, Aminen und Aldehyden oder Ketonen, die erhältlich sind, indem man

(1) substituierte einwertige Phenole, die in p-Stellung und in einer der beiden o-Stellungen oder in beiden o-Stellungen unsubstituiert sind, unsubstituierte zweiwertige einkernige Phenole oder unsubstituierte oder substituierte zwei- oder mehrwertige, zwei- oder mehrkernige Phenole, die mindestens zwei zur Umsetzung mit Aldehyd oder Keton reaktive Kernstellen aufweisen,

(2) substituierte aromatische Monoamine, die mindestens eine, vorzugsweise mindestens zwei, zur Umsetzung mit Aldehyd oder Keton reaktive Kernstellen aufweisen, unsubstituierte aromatische ein- oder zweikernige Diamine oder substituierte aromatische ein- oder zweikernige Diamine, die mindestens zwei zur Umsetzung mit Aldehyd oder Keton reaktive Kernstellen aufweisen und

(3) Aldehyde oder Ketone bei einem pH-Wert von höchstens 6 miteinander umsetzt, wobei im Reaktionsgemisch das Mischungsverhältnis von Phenol zu Amin zu Aldehyd oder Keton 1 : 1 :1,2 bis 6 : 1 : 8, vorzugsweise 2 : 1 : 4 bis 6 : 1 : 8, insbedondere 3 : 1 : 5 bis 6 : 1 : 8, Mole und im Falle eines substituierten mehrwertigen mehrkernigen Phenols 0,344 : 1 : 1,2 bis 6 : 1 : 8 Mole beträgt, und gegebenenfalls

(c) Härtungsbeschleuniger in einer Menge von 0,01 bis 10 Gewichts-%, bezogen auf das Gesamtgewicht (a) und (b), wobei im härtbaren Gemisch pro 1 Epoxidäquivalent 0,9 bis 1,5 Aequivalente aktives Wasserstoffatom, bezogen auf die OH- und $NH_2$-Gruppe, vorhanden sind.

Vorzugsweise enthalten die erfindungsgemässen Mischungen als Epoxid-verbindungen (a) solche mit aromatischen Gruppierungen im Molekül, wie beispielsweise Polyglycidyläther von mehrwertigen Phenolen oder N-Glycidylverbindungen von aromatischen Aminen, und als Kondensationsprodukte (b) solche, worin die Reaktionskomponente (1) substituierte einwertige Phenole, die in p-Stellung und in einer der beiden o-Stellungen oder in beiden o-Stellungen unsubstituiert sind, oder substituierte zwei- oder mehrwertige, zwei- oder mehrkernige Phenole, die mindestens zwei zur Umsetzung mit Aldehyd oder Keton reaktive Kernstellen aufweisen, darstellen, und die Reaktionskomponente (2) substituierte aromatische Monoamine, die mindestens eine, vorzugsweise zwei, zur Umsetzung mit Aldehyd oder Keton reaktive Kernstellen aufweisen, oder unsubstituierte oder substituierte aromatische zweikernige Diamine, die mindesten zwei zur Umsetzung mit Aldehyd oder Keton reaktive Kernstellen aufweisen, darstellen.

Die erfindungsgemässen Mischungen enthalten als Kondensationsprodukte (b) insbesondere solche, worin die Reaktionskomponente (1) o- oder p-Alkylphenol oder in o,o'-Stellung substituiertes zweiwertiges zweikerniges Phenol darstellt, die Reaktionskomponente (2) o- oder p-Toluidin, 2,6-Diäthylanilin, 4,4'-Diaminodiphenylsulfon oder 4,4'-Diamino-3,3'-dimethyldiphenyl-methan darstellt und worin die Reaktions-komponente (3) Form-, Acet- oder Propionaldehyd oder Aceton ist.

Ferner sind in den erfindungsgemässen Mischungen solche Kondensations-produkte (b) bevorzugt, die bei einem pH-Wert von 5,5 bis 0,5 hergestellt worden sind.

Als Epoxidverbindungen (a), die in den härtbaren Gemischen eingesetzt werden können, eigenen sich alle Typen von Epoxidharzen, beispielsweise solche, die direkt an Sauerstoff-, Stickstoff- oder Schwefelatome gebundene Gruppen der Formel I

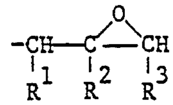

(I)

worin entweder $R^1$ und $R^3$ je ein Wasserstoffatom darstellen, in welchem Fall $R^2$ dann ein Wasserstoffatom oder eine Methylgruppe bedeutet, oder $R^1$ und $R^3$ zusammen $—CH_2—CH_2—$ darstellen, in welchem Fall $R^2$ dann ein Wasserstoffatom bedeutet, enthalten.

Als Beispiele solcher Harze seien Polyglycidyl- und Poly (β-methylglycidyl)-ester genannt, die man durch Umsetzung einer zwei oder Mehr Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z. B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, 4-Methyl-tetrahydrophthalsäure, Hexahydrophthalsäure und 4-Methylhexahydrophthalsäure und von aromatischen Polycarbonsäuren wie Phthalsäure, Isophthalsäure und Terephthalsäure ableiten.

Weitere Beispiele sind Polyglycidyl- und Poly-(β-methylglycidyl)-äther, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Aether lassen sich mit Poly- (epichlorhydrin) aus acylischen Alkoholen wie Aethylenglykol, Diäthylenglykol und höheren Poly-(oxyäthylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit und Sorbit, aus cycloliphatischen Alkoholen, wie Resorcit, Chinit, Bis-(4-hydroxycyclohexyl)-methan, 2,2-Bis-(4-hydroxycyclohexyl)-propan und 1,1'-Bis-(hydroxymethyl)-cyclohexen-3, und aus Alkoholen mit aromatischen Kernen, wie N,N-Bis-(2-hjydroxyäthyl)-anilin und p,p'-Bis-(2-hydroxyäthylamino)-diphenylmethan, herstellen. Man kann sie ferner aus einkernigen Phenolen, wie Resorcin und Hydrochinon, sowie mehrkernigen Phenolen, wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan (sonst als Bisphenol A bekannt) und 2,2-Bis-(3,5-dibrom-4-hydroxyphenyl)-propan, sowie aus Aldehyden, wie Formaldehyd, Acetaldehyd, Chloral und Furfurol, mit Phenolen, wie Phenol selbst und durch Chloratome oder Alkylgruppen mit jeweils bis zu neun Kohlenstoffatomen ringsubstituiertem Phenol, wie 4-Chlorphenol, 2-Methylphenol und 4-tert.-Butylphenol, gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffatome enthaltenden Aminen wie Anilin, n-Butylamin, Bis-(4-aminophenyl)-methan und Bis-(4-methylaminophenyl)-methan erhalten werden, Triglycidylisocyanurat sowie N,N'-Diglycidylderivate von cyclischen Alkylenharnstoffen wie Aethylenharnstoff und 1,3-Propylenharnstoff, und Hydantoinen, wie 5,5-Dimethylhydantoin.

Poly-(S-glycidyl)-verbindungen sind zum Beispiel die Di-S-glycidyl-derivate von Diothiolen, wie Aethan-1,2-dithiol und Bis-(4-mercaptomethylphenyl)-äther.

Beispiele für Epoxidharze mit Gruppen der Formel I, worin $R^1$ und $R^3$ zusammen eine $—CH_2CH_2—$Gruppe bedeuten, sind Bis-(2,3-epoxycyclopentyl)-äther, 2,3-Epoxycyclopenthyl-glycidyläther und 1,2-Bis-(2,3-epoxycyclopentyloxy)-äthan.

In Betracht kommen auch Epoxidharze, in welchen die 1,2-Epoxidgruppen an Heteroatome verschiedener Art gebunden sind, z. B. das N,N,O-Triglycidylderivat des 4-Aminophenols, der Glycidyläther/Glycidylester der Salicylsäure oder p-Hydroxybenzoesäure, N-Glycidyl-N'-(2-glycidyl-oxypropyl)-5,5-dimethylhydantoin und 2-Glycidyloxy-1,3-bis-(5,5-dimethyl-1-glycidylhydantoinyl-3)-propan.

Gewünschtenfalls kann man Epoxidharzgemische verwenden.

Bevorzugte Epoxidharze sind solche mit einer aromatischen Gruppierung im Molekül, wie beispielsweise Polyglycidyläther von mehrwertigen Phenolen oder N-Glycidylverbindungen aromatischer Amine.

Speziell bevorzugte Epoxidharze sind die Polyglycidyläther von mehrwertigen Phenolen, wie beispielsweise die Polyglycidyläther des 2,2-Bis-(4-hydroxyphenyl)-propans, des Bis-(4-hydroxyphenyl)-methans, des 2,2-Bis-(p-hydroxytetrabromphenyl)-propans, des Tetra-(p-hydroxyphenyl)-äthans oder eines aus Formaldehyd und Phenol oder durch ein Chloratom oder eine Alkylgruppe substituiertem Phenol gebildeten Novolaks mit einem 0,5 val/kg übersteigendem 1,2-Epoxidgehalt.

Die im sauren Medium erhältlichen Kondensationsprodukte (b) können nach den in « Methoden der organischen Chemie (Houben-Weyl) », Band XIV/2 (1963), Seite 201 bis 213, oder in der DE-OS 2 217 099 beschriebenen Verfahren hergestellt werden, indem man die entsprechenden Phenole (1), Amine (2) und Aldehyde bzw. Ketone (2) in Gegenwart einer Säure, Mineralsä—ure oder organischen Säure, bei einem pH-Wert von höchstens 6, vorzugsweise bei einem pH-Wert von 5,5 bis 0,5, der Kondensationsreaktion unterwirft, wobei man diese ein- oder mehrstufig durchführen kann. Beispielsweise ist es möglich, zuerst aus dem Phenol (1) oder dem Amin (2) mit dem Aldehyd bzw. Keton (3) ein Vorkondensat herzustellen, das dann mit der dritten Komponente, gegebenenfalls unter weiterer Zugabe von Aldehyd oder Keton, zu dem Kondensationsprodukt (b) umgesetzt wird.

Sowohl die zur Herstellung der Kondensationsprodukte (b) eingesetzten Phenole als auch die eingesetzten Amine Können mit allen Substituenten, die an der Kondensationsreaktion nicht beteiligt sind, also neutral verhalten, substituiert sein. Beispielsweise kommen als solche Substituenten Halogenatome, vorzugsweise Chlor- oder Bromatome, Alkylgruppen, vorzugsweise solche mit 1 bis 4 C-Atomen, halogenierte Alkylgruppen, Alkenylgruppen mit bis zu 4 C-Atomen, wie beispielsweise Allyl oder 1-Propenyl, Alkoxygruppen, vorzugsweise mit 1 bis 4 C-Atomen, oder veresterte Carboxylgruppen mit 1 bis 4 C-Atomen in der Alkoholkomponente in Frage.

Als substituierte einwertige Phenole (1) sind beispielsweise geeignet p-Chlorphenol, o-Bromphenol, o-Kresol, p-Kresol, p-Chlor-m-kresol, o-Allylphenol, 2-Propenylphenol, p-Nonylphenol, o-Methoxyphenol, o-Aethoxyphenol, p-Nitrophenol, p-Phenylphenol, o-Phenolsulfonsäure, Thymol, Carvacrol, von denXylenolen 1,2-Dimethyl-3-oxybenzol, 1,2-Dimethyl-4-oxybenzol und 1,4-Dimethyl-2-oxybenzol und ferner Guajacol.

Die unsubstituierten zweiwertigen einkernigen Phenole (1) sind Brenzcatechin, Resorcin und Hydrochinon.

Als unsubstituierte oder substituierte zweiwertige zweikernige Phenole (1) eignen sich beispielsweise solche der Formel II

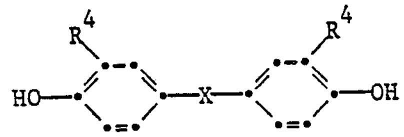

(II)

worin $R^4$ je für ein Wasserstoff-, Halogenatom, Alkyl mit 1 bis 9 C-Atomen, Alkenyl mit bis zu 4 C-Atomen, Alkoxy mit 1 bis 4 C-Atomen und X für eine einfache Bindung, Alkylen mit bis zu 5 C-Atomen, Cycloalkylen, vorzugsweise Cyclohexylen, $—SO_2—$, —SO—, —S— oder —O— steht. Als Verbindungen der Formel II, die bekannte Verbindungen darstellen, seien beispielsweise 2,2-Bis-(3-methyl-4-hydroxyphenyl)-propan, 2,2-Bis-(3-chlormethyl-4-hydroxyphenyl)-propan. Bis-(3-tert.-butyl-4-hydroxyphenyl)-sulfon und Bis-(3-allyl-4-hydroxyphenyl)-methan, 4,4'-Dihydroxydiphenyl, 2,4-Bis-(4-hydroxyphenyl)-2-methylbutan oder Bis-(4-hydroxyphenyl)-methan genannt.

Als substituierte mehrwertige mehrkernige Phenole (1) eignen sich beispielsweise solche der Formel III

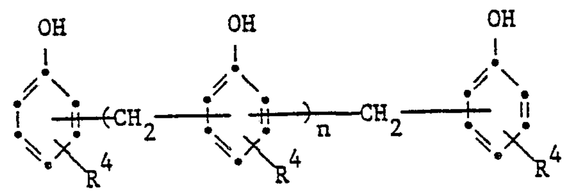

(III)

worin $R^4$ die gleiche Bedeutung hat wie in Formel II und n für eine Zahl von 1 bis 10 steht.

Die Verbindungen der Formel III stellen bekannte Verbindungen dar und können hergestellt werden, indem man das mit $R^4$ substituierte Phenol mit Formaldehyd in bekannter Weise zu den entsprechenden Novolaken umsetzt.

Als substituierte aromatische Monoamine (2) sind beispielsweise o-, p- oder m-Toluidin, o,o'- oder o,p-Dimethylanilin, o,o'- oder o,p-Diäthylanilin, o-Methyl-o'-äthylanilin, o-Isopropyl-o'-methylanilin und Sulfanilsäure geeignet.

Die unsubstituierten aromatischen einkernigen Diamine (2) sind o-, m- und p-Phenylendiamin, die gegebenenfalls dialkyliert sein können. Geeignete unsubstituierte oder substituierte aromatische zweikernige Diamine (2) sind beispielsweise solche der Formel IV

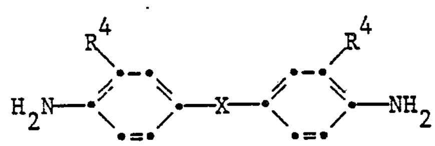

(IV)

worin $R^4$ und X die gleiche Bedeutung wie in Formel II haben. Die Verbindungen der Formel IV sind bekannt und als Beispiele seien genannt 4,4'-Diamino-diphenylmethan, 3,3'-Dimethyl-4,4'-diaminodiphenylmethan, Bis-(4-aminophenyl)-2,2-propan, 4,4'-Diamino-diphenyläther, 4,4'-Diaminodiphenylsulfon, 4,4'-Diaminophenylsulfid und 4,4'-Diaminodiphenyläther.

Als aromatische zweikernige, unsubstituierte oder substituierte Diamine eignen sich beispielsweise auch 1,5-Diaminonaphthalin und seine mono- oder dialkylsubstituierten Derivate.

Zur Herstellung der sauren Kondensationsprodukte (b) können als Aldehyd oder Keton (3) im Prinzip

alle Verbindungen mit einer Aldehyd- oder reaktiven Ketogruppe eingesetzt werden. Vorzugsweise setzt man die im Handel erhältlichen Aldehyde oder Ketone ein, wie beispielsweise Formaldehyd, Acetaldehyd, Propionaldehyd, Chloral, Bromal, Benzaldehyd, Furfural oder Aceton, Diäthylketon, Acetophenon oder Benzophenon. Insbesondere verwendet man Form-, Acet- oder Propionaldehyd oder Aceton.

Zur Aushärtung der erfindungsgemässen, härtbaren Gemische kann man diesen gewünschtenfalls Härtungsbeschleuniger bzw. -katalysatoren zusetzen. Als solche Verbindungen sind zum Beispiel die quaternären Ammoniumsalze, Imidazole, Imidazoline oder Phosphoniumsalze organischer oder anorganischer Säuren geeignet. Es können jedoch auch beliebige andere Katalysatoren, welche die Umsetzung einer 1,2-Epoxidgruppe mit einer phenolischen Hydroxylgruppe wirksam beschleunigen, verwendet werden.

Die Härtungsbeschleuniger bzw. Katalysatoren werden vorzugsweise in einer Menge von 0,1 bis 5 Gewichts-%, bezogen auf das Gesamtgewicht von Epoxidverbindung (a) und Kondensationsprodukt (b), eingesetzt.

Die erfindungsgemässen härtbaren Mischungen finden ihren Einsatz vor allem auf den Gebieten des Oberflächenschutzes, der Elektrotechnik, der Laminierverfahren und im Bauwesen. Sie können in jeweils dem speziellen Anwendungszweck angepasster Formulierung, im ungefüllten oder gefüllten Zustand, gegebenenfalls in Form von Lösungen oder Dispersionen, als Lacke, Pressmassen, Sinterpulver, Tauchharze, Spritzgussformulierungen, Imprägnierharze, Bindemittel und insbesondere als Laminierharze verwendet werden.

Gegenstand der Erfindung ist daher auch ein Verfahren zur Herstellung von vernetzten, unlöslichen und unschmelzbaren Kunststoffprodukten aus den erfindungsgemäßen Mischungen, dadurch gekennzeichnet, dass man die Mischungen bei Temperaturen zwischen 120 bis 250 °C, vorzugsweise 150 bis 200 °C, aushärtet.

Die erfindungsgemässe Herstellung der vernetzten, unschmelzbaren Produkte erfolgt in der Regel unter gleichzeitiger Formgebung zu Formkörpern, Flächengebilden, Laminaten, Verklebungen oder Schäumen. Dabei können den härtbaren Massen die in der Technologie der härtbaren Kunststoffe gebräuchlichen Zusätze, wie Füllstoffe, Weichmacher, Pigmente, Farbstoffe, Formtrennmittel, Treibmittel, flammhemmende Stoffe, zugesetzt werden. Als Füllstoffe können zum Beispiel Glasfasern, Glimmer, Quarzmehl, Kaolin, kolloidales Siliziumdioxid oder Metallpulver verwendet werden; als Formtrennmittel kann zum Beispiel Calciumstearat dienen und als Treibmittel können beispielsweise Azodicarbonsäure-amide, α,α'-Azoisobuttersäurenitril oder organische Sulfohydrazide verwendet werden.

Herstellung der Kondensate aus Phenolen, Aminen und Aldehyden bzw. Ketonen im sauren Medium.

Kondensat I

In einem Kessel, der mit Rührer, Thermometer, Tropftrichter, Rückflusskühler und Gaseinleitungsrohr versehen ist, werden 1,35 kg o-Kresol und 0,446 kg o-Toluidin vorgelegt, gemischt und die Luft im Kolben wird durch Stickstoff verdrängt. Anschliessend lässt man 0,512 kg wasserfreie Essigsäure zufliessen, wobei eine exotherme Reaktion einsetzt. Das Gemisch wird auf 85 °C erwärmt, bevor innerhalb von 30 Minuten 0,623 kg Paraformaldehyd zugegeben werden. Diese Zugabe bewirkt einen starken Temperaturanstieg des Kolbeninhalts bis auf 115 °C. Nach Abklingen der Exothermie lässt man das Produkt bei etwa 95 °C noch 10 Stunden unter Stickstoff rühren. Anschliessend wird das Heizbad entfernt und man lässt 2,8 kg Aceton zufliessen, wobei die Temperatur auf etwa 60 °C fällt. Dann leitet man während etwa 2 Stunden 0,17 kg Ammoniakgas ein und lässt die inhomogene Flüssigkeit auf Raumtemperatur abkühlen und solange ruhig stehen, bis sich die beiden Schichten vollständig getrennt haben. Die organische Phase wird abgetrennt und unter starkem Rühren während etwa 1 Stunde in 9 kg einer Eis/Wasser-Mischung getropft, wobei eine Festsubstanz ausfällt. Diese wird abfiltriert, der Filterrückstand wird mit viel Wasser gewaschen und dann getrocknet. Es werden, 1,92 kg eines hell-beigen Pulvers mit einem Erweichungspunkt von 129 °C gewonnen.

Kondensat II

In einem 4,5 l Sulfierkolben, ausgerüstet mit einem Ankerrührer aus Metall, Thermometer, Rückflusskühler und einem Tropftrichter werden 248,3 g (1,0 Mol) 4,4'-Diaminodiphenylsulfon, 648,8 g (6,0 Mol) o-Kresol und 189,1 g (2,1 Mol) Oxalsäure vorgelegt und unter Rühren 528 g (6,5 Mol) 37 %iger, wässriger Formaldehyd innerhald von 35 Minuten bei einer Temperatur von 83° bis 93 °C zugetropft. Man lässt das Reaktionsgemisch bei Siedetemperatur 3 Stunden und 40 Minuten lang reagieren, neutralisiert anschliessend mit 589,2 g (4,2 Mol) 40 %igem, wässrigem Kaliumhydroxid, dekantiert die wässrige Phase ab, versetzt mit 1 Liter siedendem Wasser, rührt das Reaktionsgemisch 10 Minuten lang, dekantiert ab und wiederholt den Vorgang 6 mal. Nach dem Auswachen der löslichen Anteile wird das Reaktionsgemisch in 2 Liter Aceton gelöst, die Lösung filtriert und das Filtrat in 36 Liter Eiswasser eingetragen, das mit einem Turborührer kräftig durchmischt wird. Das gefällte Produkt wird abfiltriert, mit Wasser gewaschen und anschliessend bei 50 °C im Vakuum getrocknet.

Man erhält 848,9 g eines gelblichen Pulvers, dessen Erweichungspunkt nach Kofler 148 °C beträgt.

Kondensat III

149,2 g (1,0 Mol) 2,6-Diäthylanilin, 368,4 g eines technisch hergestellten o-Kresolnovolaks (Aequivalentgewicht : 122,8), 101,5 g (1,25 Mol) 37 %iger wässriger Formaldehyd und 107,9 g (0,55 Mol) 50 %ige, wässrige Schwefelsäure werden 4 Stunden und 24 Minuten lang gemäss der Herstellung von Kondensat II zur Reaktion gebracht und anschliessend mit 123,4 g (1,10 Mol) 50 %igem, wässrigem Kaliumhydroxid neutralisiert. Es wird wie bei Kondensat II aufgearbeitet und es werden 518,6 g eines beigen, pulverförmigen Novolaks erhalten, dessen Erweichungspunkt nach Kofler bei 100 °C liegt.

Kondensat IV

Es werden 242,4 g (2,0 Mol) 2,4-Dimethylanilin, 491,2 g eines technisch hergestellten o-Kresol-Formaldehyd-Novolaks (mittleres Molekulargewicht Mn = 714 ; OH-Aequivalentgewicht = 122,8), 215,8 g (1,1 Mol) 50 %ige Schwefelsäure und 202,9 g (2,5 Mol) 37 %iger Formaldehyd 4 Stunden und 40 Minuten lang zur Reaktion gebracht und dann neutralisiert mit 246,8 g (2,2 Mol) 50 %iger Kaliumhydroxidlösung. Man dekantiert die wässrige Phase ab, versetzt mit 1 Liter siedendem Wasser, rührt das Reaktionsgemisch 10 Minuten lang, dekantiert ab und wiederholt den Vorgang 6 mal. Nach dem Auswaschen der wasserlöslichen Anteile wird das Reaktionsgemisch in 1,5 Liter Aceton gelöst, die Lösung filtriert und das Filtrat in 24 Liter Eiswasser eingetragen, das mit einem Turborührer kräftig durchgemischt wird. Das gefällte Produkt wird abfiltriert, mit Wasser gewaschen und anschliessend bei 50 °C im Vakuum getrocknet. Die Ausbeute beträgt 689,8 g. Das Reaktionsprodukt hat einen Erweichungspunkt (nach Kofler) von 98 °C.

## Beispiel 1

Aus 162 g 1,1,2,2-Tetra-(p-glycidyloxyphenyl)-äthan (ERRA® 0163), 245 g Tetrabrombisphenol A-diglycidyläther mit einem Epoxidgehalt von durchschnittlich 2,75 Val/kg und einem Bromgehalt von 48,5 %, 263 g Kondensat I und Methyläthylketon wird eine 60 gewichtsprozentige Lösung hergestellt. Mit dieser Lösung wird Glasgewebe imprägniert, welches danach bei 140 °C getrocknet wird. Es entsteht ein sogenanntes Prepreg. Je 8 Lagen dieses Prepregs werden während 2 Stunden bei 170 °C und einem Druck von $29{,}4 \cdot 10^4$ Pa verpresst, wodurch eine Laminatplatte entsteht.

Nach 2-minütiger Exposition von Laminatproben (5 × 5 cm) in den Dampf von siedendem Trichloräthylen beträgt ihre Gewichtsaufnahme nur 0,04 %. Trichloräthylen ist ein in der Leiterplattenindustrie häufig gebrauchtes Lösungsmittel. Es ist daher wichtig, dass eine möglichst geringe Menge davon absorbiert wird.

## Beispiel 2

800 g 1,1,2,2-Tetra-(p-glycidyloxyphenyl)-äthan und 800 g Tetrabrombisphenol A-diglycidyläther mit einem Epoxidgehalt von durchschnittlich 2,75 Val/kg werden in Gegenwart katalytischer Mengen von 2-Phenylimidazol 12 Stunden auf 185 bis 190 °C erwärmt. Es entsteht dabei ein Epoxidharz mit einem Epoxidäquivalentgewicht von 277. 646 g dieses Epoxidharzes, 375 g Kondensat I und 1,0 g 2-Phenylimidazol werden in Methyläthylketon gelöst (Konzentration etwa 55 Gewichtsprozent). Wie in Beispiel 1 beschrieben, wird diese Lösung zusammen mit Glasgewebe zur Herstellung von Laminaten benutzt. Die Glasumwandlungstemperatur, gemessen mit dem Differential Thermo-Analyzer, beträgt 191 °C. Die Trichloräthylenaufnahme, gemessen wie in Beispiel 1, beträgt 0,02 %.

## Beispiel 3

Es wird eine Imprägnierlösung hergestellt aus 161 g N,N,N',N'-Tetraglycidyl-4,4-diaminodiphenylmethan (durchschnittliches Epoxidgehalt 8,0 Val/kg), 290 g Tetrabrombisphenol A-diglycidyläther (durchschnittlicher Epoxidgehalt 2,75 Val/kg), 363 g Kondensat I und 540 g Methyläthylketon. Wie in Beispiel 1 beschrieben, werden aus dieser Lösung und Glasgewebe Laminate hergestellt und deren Trichloräthylendampfaufnahme bestimmt, die 0,01 Gewichtsprozent beträgt.

## Beispiel 4

Aus 171 g 1,1,2,2-Tetraglycidyloxyphenyläthan, 258 g Tetrabrombisphenol A-diglycidyläther (durchschnittlicher Epoxidgehalt 2,75 Val/kg); 245 g Kondensat II und 450 g Methyläthylketon wird eine 60 Gewichtsprozentige Laminierlösung hergestellt. Mit dieser Lösung und Glasgewebe werden wie in Beispiel 1 beschrieben Laminate hergestellt und deren Trichloräthylendampfaufnahme bestimmt, die 0,01 Gewichtsprozent beträgt. Die Lagerstabilität der fertigen Imprägnierlösung beträgt 24 Tage.

Beispiel 5

162 g 1,1,2,2-Tetra-(p-glycidyloxyphenyl)-äthan, 275 g Tetrabrombisphenol A-diglycidyläther (durchschnittlicher Epoxidgehalt 2,75 Val/kg), 143 g eines mit Tetrabrombisphenol A nach dem Advancementverfahren vorverlängerten Bisphenol A-diglycidyläthers (Bromgehalt durchschnittlich 21 Gewichtsprozent, Epoxidgehalt 2,1 Val/kg) und 272 g Kondensat III werden zusammen in 500 g Methyläthylketon gelöst. Um Kürzere Verarbeitungszeiten zu erzielen, empfiehlt sich die Zugabe von 3,0 g 2-Phenylimidazol.

Aus dieser Lösung und Glasgewebe werden, wie in Beispiel 1 beschrieben, Laminate hergestellt und deren Aufnahme an Trichloräthylen bestimmt, die 0,05 Gewichtsprozent beträgt. Ohne die Verwendung von 2-Phenyl-imidazol wird die gleiche Gewichtsveränderung festgestellt.

Beispiel 6

19,0 g Bisphenol A-diglycidyläther mit einem Epoxidgehalt von 5,3 Val/kg, 10,7 g Kondensat I und 0,08 g 2-Phenylimidazol werden so gut als möglich vermischt und bei 100 °C aufgeschmolzen. Die Schmelze wird ca. 2 mm hoch in eine Form gegossen und während 2 h bei 170 °C gehärtet. Eine thermogravimetrische Analyse des erhaltenen harten Formstoffs ergibt im technisch interessanten Temperaturbereich bis 250 °C einen Gewichtsverlust von nur 1,7 %.

Beispiel 7

Es wird eine 60 gewichtsprozentige Imprägnierlösung in Methyläthylketon hergestellt aus 269,6 g eines mit Tetrabrombisphenol A nach dem Advancementverfahren vorverlängerten Bisphenol A-diglycidyläthers (Bromgehalt durchschnittlich 21 Gew.-%, Epoxidgehalt 2,1 Val/kg), 171,2 g Tetrabrombisphenol A-diglycidyläther, 107,2 g 1,1,2,2-Tetraglycidyloxyphenyläthan, 196,0 g Kondensat I und 0,92 g Phenylimidazol. Die Anfangsviskosität dieser Lösung verdoppelt sich im Verlauf von 19 Tagen bei 25 °C.

Beispiel 8

144 g 1,1,2,2-Tetra-(p-glycidyloxyphenyl)-äthan, 259 g Tetrabrombisphenol-A-diglycidyläther (durchschnittlicher Epoxidgehalt 2,75 Val/kg) und 300 g Kondensat IV werden zusammen in 484 g Methylglykol gelöst. Mit dieser Lösung wird Glasgewebe imprägniert, welches danach bei 170 °C getrocknet wird, wobei ein sogenanntes Prepreg entsteht. Je 8 Lagen dieses Prepregs werden 2 Stunden lang bei 170 °C und einem Druck von $29 \cdot 10^4$ Pa verpresst, wobei Laminatplatten entstehen. Nach 2-minütiger Exposition von Laminatproben (5 × 5 cm) in den Dampf von siedendem Trichloräthylen beträgt ihre Gewichtsaufnahme nur 0,09 %.

**Patentansprüche**

1. Härtbares Gemisch, enthaltend

(a) Epoxidverbindungen mit durchschnittlich mehr als einer 1,2-Epoxidgruppe pro Molekül,

(b) im sauren Medium hergestellte Kondensationsprodukte aus Phenolen, Aminen und Aldehyden oder Ketonen, die erhältlich sind, indem man

(1) substituierte einwertige Phenole, die in p-Stellung und in einer der beiden o-Stellungen oder in beiden o-Stellungen unsubstituiert sind, unsubstituierte zweiwertige einkernige Phenole oder unsubstituierte oder substituierte zwei- oder mehrwertige, zwei- oder mehrkernige Phenole, die mindestens zwei zur Umsetzung mit Aldehyd oder Keton reaktive Kernstellen aufweisen,

(2) substituierte aromatische Monoamine, die mindestens eine, vorzugsweise mindestens zwei, zur Umsetzung mit Aldehyd oder Keton reaktive Kernstellen aufweisen, unsubstituierte aromatische ein- oder zweikernige Diamine oder substituierte aromatische ein- oder zweikernige Diamine, die mindestens zwei zur Umsetzung mit Aldehyd oder Keton reaktive Kernstellen aufweisen und

(3) Aldehyde oder Ketone bei einem pH-Wert von höchstens 6 miteinander umsetzt, wobei im Reaktionsgemisch das Mischungsverhältnis von Phenol zu Amin zu Aldehyd oder Keton 1 : 1 : 1,2 bis 6 : 1 : 8 Mole und im Falle eines substituierten mehrwertigen mehrkernigen Phenols 0,344 : 1 : 1,2 bis 6 : 1 : 8 Mole beträgt, und gegebenenfalls

(c) Härtungsbeschleuniger in einer Menge von 0,01 bis 10 Gewichts-%, bezogen auf das Gesamtgewicht (a) und (b), wobei im härtbaren Gemisch pro 1 Epoxidäquivalent 0,9 bis 1,5 Aequivalente aktives Wasserstoffatom, bezogen auf die OH- und $NH_2$-Gruppe, vorhanden sind.

2. Mischungen gemäss Anspruch 1, dadurch gekennzeichnet, dass sie als Epoxidverbindungen (a) solche mit aromatischen Gruppierungen im Molekül enthalten.

3. Mischungen gemäss Anspruch 1, dadurch gekennzeichnet, dass sie als Epoxidverbindungen Polyglycidyläther von mehrwertigen Phenolen oder N-Glycidylverbindungen aromatischer Amine enthalten.

4. Mischungen gemäss Anspruch 1, dadurch gekennzeichnet, dass sie als Kondensationsprodukte

(b) solche enthalten, worin die Reaktionskomponente (1) substituierte einwertige Phenole, die in p-Stellung und in einer der beiden o-Stellungen oder in beiden o-Stellungen unsubstituiert sind, oder substituierte zwei- oder mehrwertige, zwei- oder mehrkernige Phenole, die mindestens zwei zur Umsetzung mit Aldehyd oder Keton reaktive Kernstellen aufweisen, darstellen.

5. Mischungen gemäss Anspruch 4, dadurch gekennzeichnet, dass sie als Kondensationsprodukte (b) solche enthalten, worin die Reaktionskomponente (1) o- oder p-Alkylphenol oder in o,o'-Stellung substituiertes zweiwertiges zweikerniges Phenol darstellt.

6. Mischungen gemäss Anspruch 1, dadurch gekennzeichnet, dass sie als Kondensationsprodukte (b) solche enthalten, worin die Reaktionskomponente (2) substituierte aromatische Monoamine, die mindestens eine, vorzugsweise zwei, zur Umsetzung mit Aldehyd oder Keton reaktive Kernstellen aufweisen, oder unsubstituierte oder substituierte aromatische zweikernige Diamine, die mindestens zwei zur Umsetzung mit Aldehyd oder Keton reaktive Kernstellen aufweisen, darstellen.

7. Mischungen gemäss Anspruch 6, dadurch gekennzeichnet, dass sie als Kondensationsprodukte (b) solche enthalten, worin die Reaktionskomponente (2) o- oder p-Toluidin, 2,6-Diäthylanilin, 4,4'-Diamino-diphenylsulfon oder 4,4'-Diamino-3,3'-dimethyldiphenyl-methan darstellt.

8. Mischungen gemäss Anspruch 1, dadurch gekennzeichnet, dass sie als Kondensationsprodukte (b) solche enthalten, worin die Reaktionskomponente (3) Form-, Acet- oder Propionaldehyd oder Aceton ist.

9. Mischungen gemäss Anspruch 1, dadurch gekennzeichnet, dass sie als Kondensationsprodukte (b) solche enthalten, die bei einem pH-Wert von 5,5 bis 0,5 kondensiert worden sind.

10. Mischungen gemäss Anspruch 1, dadurch gekennzeichnet, dass sie als Kondensationsprodukte (b) solche enthalten, die aus einem Reaktionsgemisch mit einem Mischungsverhältnis von Phenol zu Amin zu Aldehyd oder Keton von 2 : 1 : 4 bis 6 : 1 : 8 erhalten worden sind.

11. Mischungen gemäss Anspruch 10, dadurch gekennzeichnet, dass das Mischungsverhältnis 3 : 1 : 5 bis 6 : 1 : 8 beträgt.

12. Verfahren zur Herstellung von vernetzten, unlöslichen und unschmelzbaren Kunststoffprodukten aus den härtbaren Mischungen gemäss Anspruch 1, dadurch gekennzeichnet, dass man die Mischungen im Temperaturbereich von 120 bis 250 °C, vorzugsweise von 150 bis 200 °C, aushärtet.

**Claims**

1. A curable mixture containing

(a) epoxide compounds with on average more than one 1,2-epoxide group per molecule,

(b) condensates prepared in an acid medium from phenols, amines and aldehydes or ketones, which are obtainable by reacting

(1) substituted monohydric phenols which are unsubstituted in the p-position and in one of the two o-positions or in both o-positions, unsubstituted dihydric mononuclear phenols or unsubstituted or substituted dihydric or polyhydric, dinuclear or polynuclear phenols which contain at least two reactive nucleus positions for reaction with an aldehyde or ketone,

(2) substituted aromatic monoamines which contain at least one, preferably at least two, reactive nucleus positions for reaction with an aldehyde or ketone, unsubstituted aromatic mononuclear or dinuclear diamines or substituted aromatic mononuclear or dinuclear diamines which contain at least two reactive nucleus positions for reaction with an aldehyde or ketone, and

(3) aldehydes or ketones with one another at a pH value of not more than 6, the molar ratio of phenol to amine to aldehyde or ketone in the reaction mixture being 1 : 1 1.2 to 6 : 1 : 8, and in the case of a substituted polyhydric, polynuclear phenol being 0.344 : 1: 1.2 to 6 : 1 : 8 and, where relevant,

(c) curing accelerators in an amount of 0.01 to 10 % by weight, relative to the total weight of (a) and (b), 0.9 to 1.5 equivalents of active hydrogen atoms, based on the OH and $NH_2$ group, being present in the curable mixture per L epoxide equivalent.

2. A mixture according to claim 1, which contains epoxide compounds (a) with aromatic groupings in the molecule.

3. A mixture according to claim 1, which contains polyglycidyl ethers of polyhydric phenols or N-glycidyl compounds of aromatic amines as the epoxide compounds.

4. A mixture according to claim 1, which contains condensates (b) in which reaction components (1) are substituted monohydric phenols which are unsubstituted in the p-position and in one of the two o-positions or in both o-positions, or substituted dihydric or polyhydric dinuclear or polynuclear phenols which contain at least two reactive nucleus positions for reaction with an aldehyde or ketone.

5. A mixture according to claim 4, which contains condensates (b) in which reaction component (1) is an o- or p-alkylphenol or a dihydric dinuclear phenol substituted in the o,o'-position.

6. A mixture according to claim 1, which contains condensates (b) in which reaction components (2) are substituted aromatic monoamines which contain at least one, preferably two, reactive nucleus positions for reaction with an aldehyde or ketone, or unsubstituted or substituted aromatic dinuclear diamines which contain at least two reactive nucleus positions for reaction with an aldehyde or ketone.

7. A mixture according to claim 6, which contains condensates (b) in which reaction component (2) is

o- or p-toluidine, 2,6-diethylaniline, 4,4'-diaminodiphenyl sulfone or 4,4'-diamino-3,3'-dimethyldiphenylmethane.

8. A mixture according to claim 1, which contains condensates (b) in which reaction component (3) is formaldehyde, acetaldehyde, propionaldehyde or acetone.

9. A mixture according to claim 1 which contains condensates (b) which have been condensed at a pH value of 5.5 to 0.5.

10. A mixture according to claim 1, which contains condensates (b) which have been obtained from a reaction mixture with a ratio of phenol to amine to aldehyde or ketone of 2 : 1 : 4 to 6 : 1 : 8.

11. A mixture according to claim 10, wherein the ratio in the mixture is 3 : 1 : 5 to 6 : 1 : 8.

12. A process for the production of crosslinked, insoluble and infusible plastics products form a curable mixture according to claim 1, which comprises curing the mixture in the temperature range from 120 to 250 °C, preferably from 150 to 200 °C.

**Revendications**

1. Mélange durcissable contenant :

(a) des composés époxydiques dont la molécule renferme en moyenne plus d'un radical époxy-1,2,

(b) des produits de condensation qui ont été préparés en milieu acide à partir de phénols, d'amines et d'aldéhydes ou de cétones et que l'on a obtenus en faisant réagir ensemble, à un pH d'au plus 6 :

(1) des monophénols substitués mais non substitués en position para et en l'une des deux positions ortho ou en les deux positions ortho, des diphénols à un seul noyau non substitué ou des di- ou poly- phénols à deux ou à plus de deux noyaux, substitués ou non, chacun de ces phénols ayant au moins deux endroits du noyau capables de réagir avec un aldéhyde ou avec une cétone,

(2) des monoamines aromatiques substituées qui présentent au moins un endroit du noyau, de préférence au moins deux, capables de réagir avec un aldéhyde ou avec une cétone, des diamines aromatiques à un ou deux noyaux, non substituées, ou des diamines aromatiques à un ou deux noyaux substituées, qui présentent au moins deux endroits du noyau capables de réagir avec un aldéhyde ou avec une cétone, et

(3) des aldéhydes ou des cétones, le rapport molaire phénol/amine/aldéhyde (ou cétone) dans le mélange étant compris entre 1 : 1 : 1,2 et 6 : 1,8, et, dans le cas d'un polyphénol à plusieurs noyaux substitué, entre 0,344 : 1 : 1,2 et 6 : 1 : 8, et éventuellement

(c) des accélérateurs de durcissement en une quantité de 0,01 à 10 % en poids par rapport au poids total de (a) et (b), le mélange durcissable contenant, par équivalent d'époxy, de 0,9 à 1,5 équivalent d'atome d'hydrogène actif relativement aux radicaux —OH et —$NH_2$.

2. Mélanges selon la revendication 1 caractérisés en ce qu'ils contiennent, comme composés époxydiques (a), des composés de ce genre qui contiennent des radicaux aromatiques dans leur molécule.

3. Mélanges selon la revendication 1 caractérisés en ce qu'ils contiennent, comme composés époxydiques, des éthers polyglycidyliques de polyphénols ou des dérivés N-glycidyliques d'amines aromatiques.

4. Mélanges selon la revendication 1 caractérisés en ce qu'ils contiennent, comme produits de condensation (b), des produits de ce genre dans lesquels la composante réactionnelle (1) est formée de monophénols substitués dont la position para et l'une des deux positions ortho, ou les deux positions ortho, sont libres, ou de di- ou polyphénols à deux ou plus de deux noyaux, substitués, qui présentent au moins deux positions du noyau capables de réagir avec un aldéhyde ou une cétone.

5. Mélanges selon la revendication 4 caractérisés en ce qu'ils contiennent, comme produits de condensation (b), des produits de ce genre dans lesquels la composante réactionnelle (1) est un o-alkylphénol, un p-alkyl-phénol ou un diphénol à deux noyaux substitué en position o,o'.

6. Mélanges selon la revendication 1 caractérisés en ce qu'ils contiennent, comme produits de condensation (b), des produits de ce genre dans lesquels la composante réactionnelle (2) est formée de monoamines aromatiques substituées qui présentent au moins une et de préférence deux positions du noyau capables de réagir avec un aldéhyde ou une cétone, ou de diamines aromatiques à deux noyaux, substituées ou non, qui présentent au moins deux positions du noyau capables de réagir avec un aldéhyde ou une cétone.

7. Mélanges selon la revendication 6 caractérisés en ce qu'ils contiennent, comme produits de condensation (b), des produits de ce genre dans lesquels la composante réactionnelle (2) est l'o-toluidine, la p-toluidine, la diéthyl-2,6 aniline, la diamino-4,4' diméthyl-3,3' diphénylméthane.

8. Mélanges selon la revendication 1 caractérisés en ce qu'ils contiennent, comme produits de condensation (b), des produits de ce genre dans lesquels la composante réactionnelle (3) est le formaldéhyde, l'acétaldéhyde, le propionaldéhyde ou l'acétone.

9. Mélanges selon la revendication 1 caractérisés en ce qu'ils contiennent, comme produits de condensation (b), des produits de ce genre qui ont été condensés à un pH de 5,5 à 0,5.

10. Mélanges selon la revendication 1 caractérisés en ce qu'ils contiennent, comme produits de condensation (b), des produits de ce genre qui ont été obtenus à partir d'un mélange réactionnel dans

lequel le rapport entre les quantités de phénol, d'amine et d'aldéhyde (ou de cétone) est compris entre 2 : 1 : 4 et 6 : 1 : 8.

11. Mélanges selon la revendication 10 caractérisés en ce que ledit rapport est compris entre 3 : 1 : 5 et 6 : 1 : 8.

12. Procédé pour préparer des produits en matières plastiques réticulés, insolubles et infusibles à partir de mélanges durcissables selon la revendication 1, procédé caractérisé en ce qu'on durcit les mélanges dans l'intervalle de températures allant de 120 à 250 °C, de préférence de 150 à 200 °C.